# FASCICULE DE BREVET EUROPEEN

(11) **EP 1 199 201 B1**
(45) Date de publication et mention de la délivrance du brevet: **07.03.2007**
(21) Numéro de dépôt: 01490041.9
(22) Date de dépôt: 04.10.2001
(51) Int. Cl.: B60J 5/04

(54) **Portière de véhicule, notamment automobile**
Fahrzeugtür, insbesondere von Autos
Vehicle door, particularly of cars

(30) Priorité: 17.10.2000 FR 0013292
(43) Date de publication de la demande: 24.04.2002
(73) Titulaire: Visteon Global Technologies, Inc., Dearborn, Michigan 48126 (US)
(72) Inventeur: Dauvergne, Jean, c/o Visteon Systéme Intérieurs, 62440 Harnes (FR); Montavon, Delphine, c/o Visteon Systéme Intérieurs, 62440 Harnes (FR)
(74) Mandataire: Duthoit, Michel Georges André

(56) Documents cités:
- EP-A- 0 692 399
- EP-A- 0 787 611
- WO-A-00/53446
- GB-A- 2 262 957
- US-A- 4 794 735
- US-A- 5 308 138
- US-A- 5 820 191
- TIKAL F ET AL: "MONTAGEVERBESSERUNGEN VERWIRKLICHT DURCH EINE MAGNESIUM-DRUCKGUSS-KONSTRUKTION" ATZ AUTOMOBILTECHNISCHE ZEITSCHRIFT,DE,FRANCKH'SCHE VERLAGSHANDLUNG. STUTTGART, vol. 98, no. 11, 1 novembre 1996 (1996-11-01), pages 626-628, XP000638714 ISSN: 0001-2785
- "ADVERTISEMENT" AUTOMOTIVE ENGINEERING,US,SOCIETY OF AUTOMOTIVE ENGINEERS. WARRENDALE, vol. 100, no. 8, 1 août 1992 (1992-08-01), page 57 XP000281059 ISSN: 0098-2571

## Description

L'invention concerne une portière de véhicule, notamment automobile.

Actuellement, dans le domaine automobile, les portières sont constituées d'un caisson obtenu par emboutissage et assemblage de tôles d'acier. Ce caisson supporte différents éléments d'équipement du véhicule tels que, par exemple, une vitre et son dispositif d'ouverture/fermeture, une serrure, un haut-parleur ou encore des charnières ou autres.

Il est revêtu du côté orienté vers l'intérieur du véhicule d'un panneau d'habillage. Quant au côté opposé, il définit la face extérieure de la portière.

Une telle structure offre donc peu de liberté quant au choix des caractéristiques de la face extérieure.

On peut également noter que le fait d'utiliser des tôles assemblées entraînent des difficultés de respect du gabarit des portières qui peuvent se reporter sur la précision de leur positionnement par rapport au reste de la carrosserie du véhicule.

De plus, les portières décrites plus haut ne sont pas entièrement satisfaisantes en ce qui concerne la sécurité contre les tentatives d'effraction et la résistance aux chocs. Elles présentent en outre un poids important.

La publication Tikal. et al, « Montageverbesserungen verwirklicht durch eine Magnesium-Druckguss-Konstruktion » ATZ Automobiltechnische Zeitschrift, vol. 98 (1996) est relative à une portière de véhicule comprenant un panneau intérieur, un panneau extérieur et une armature interne constituant de moyens de guidage et un cadre pour une vitre.

Le but de l'invention est de proposer une portière de véhicule notamment automobile, qui pallie les inconvénients précités et offre une plus grande liberté de choix en ce qui concerne son habillage, aussi bien intérieur qu'extérieur, afin de pouvoir améliorer notamment son esthétique et/ou son aérodynamisme, tout en conservant un niveau de standardisation relativement élevé des éléments qui la constituent.

Un autre but de la présente invention est de proposer une portière, notamment de véhicule automobile, dont la précision du dimensionnement et/ou du positionnement puisse être améliorée.

Un autre but de la présente invention est de proposer une portière de véhicule, notamment automobile, dont la sécurité aux tentatives d'intrusion et la résistance aux chocs soient renforcées.

Un avantage de l'invention est de permettre d'augmenter la rationalisation de la production des véhicules équipés.

D'autres buts et avantages de l'invention apparaîtront au cours de la description qui va suivre, qui n'est donnée qu'à titre indicatif, et qui n'a pas pour but de la limiter.

L'invention concerne une portière de véhicule, notamment automobile, présentant une face destinée à être orientée vers l'intérieur du véhicule, dite face intérieure, et une face destinée à être orientée vers l'extérieur du véhicule, dite face extérieure, ladite portière autorisant la mise en place d'un ou plusieurs éléments d'équipement au moins en partie situés notamment entre lesdites faces intérieure et extérieure, ladite portière étant constituée d'une armature, apte à supporter le ou lesdits éléments d'équipement, et de moyens d'habillage de ladite armature, définissant avec cette dernière, de part et d'autre de celle-ci, des réservations intérieure et extérieure permettant d'accueillir le ou lesdits éléments d'équipement, lesdits moyens d'habillage étant constitués d'un premier panneau, dit intérieur, présentant ladite face intérieure et d'un second panneau, dit extérieur, présentant ladite face extérieure, lesdits panneaux intérieur et extérieur et ladite armature présentant un même contour et étant assujettis entre eux sur une partie au moins de leur périphérie, caractérisée en ce que ledit panneau intérieur et/ou ladite armature présente le long d'une partie au moins de leur périphérie un logement, ouvert vers l'extérieur du véhicule, ladite portière comportant en outre un et/ou des joints aptes à coopérer avec le ou lesdits logements pour permettre un maintien des panneaux intérieur et extérieur et de ladite armature par pincement mutuel au niveau du ou desdits logements.

L'invention sera mieux comprise à la lecture de la description suivante accompagnée des dessins en annexe parmi lesquels :
- la figure 1 est une vue éclatée en perspective d'un exemple de réalisation de la portière conforme à l'invention,
- la figure 2 est une vue effectuée selon un plan de coupe transversale, verticale, repérée II-II à la figure 1,
- la figure 3 est une vue en perspective d'un des éléments représentés à la figure 1, selon un sens d'observation opposé à celui de cette dernière figure,
- la figure 4 détaille une partie repérée IV de la figure 2,
- la figure 5 détaille une partie repérée V de la figure 1,
- la figure 6 est une vue de face d'une variante de réalisation de l'un des éléments de la portière conforme à l'invention,
- la figure 7 est une vue de coupe d'après la ligne VII-VII représentée à la figure 6,
- la figure 8 est une vue en coupe d'après la ligne VIII-VIII illustrée à la figure 2.

L'invention concerne une portière de véhicule, notamment automobile. Il pourra s'agir d'une portière latérale.

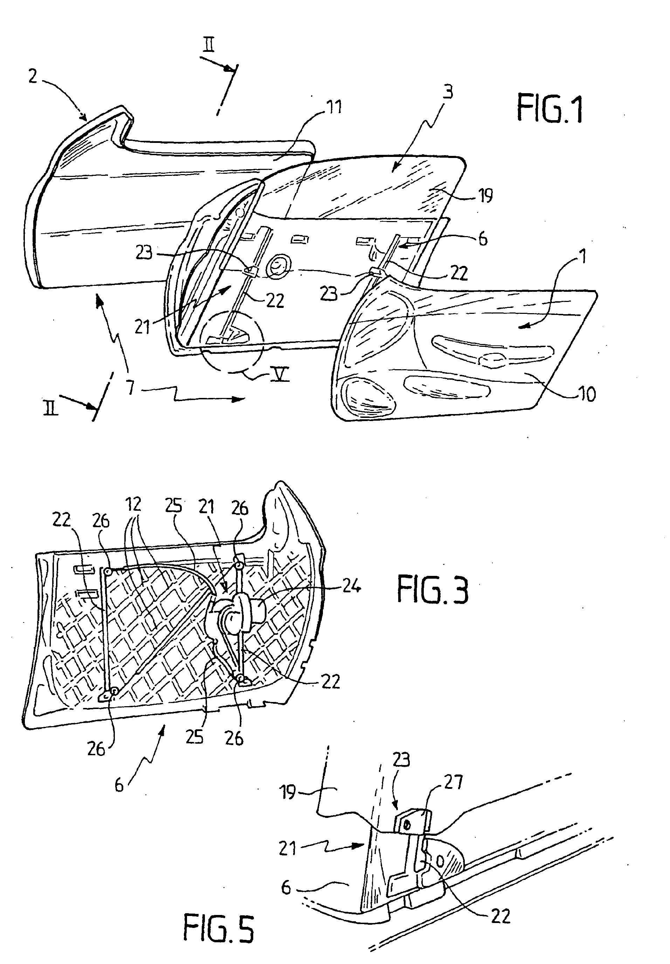

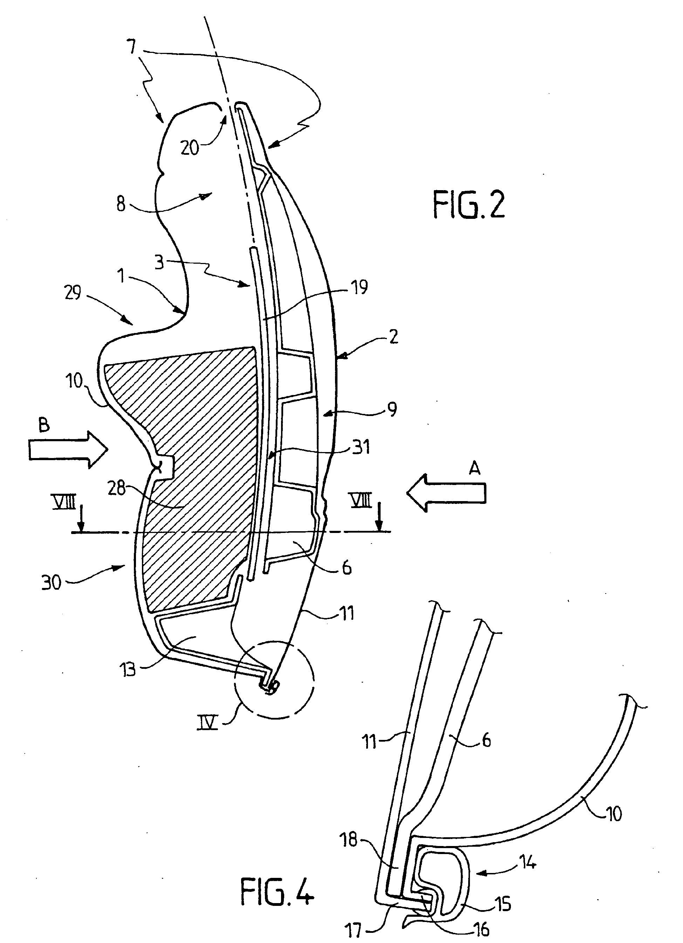

Comme illustrée aux figures 1 et 2, la portière conforme à l'invention présente une face 1 destinée à être orientée vers l'intérieur du véhicule, dite face intérieure et une face 2 destinée à être orientée vers l'extérieur du véhicule, dite face extérieure.

Ladite portière autorise la mise en place d'un ou plusieurs éléments d'équipement 3 au moins en partie situés notamment entre lesdites faces intérieure 1 et extérieure 2.

Lesdits éléments d'équipement sont éventuellement mobiles. Comme développé plus loin, il pourra s'agir, par exemple, d'une vitre 19 et de son système d'ouverture/fermeture 21. Il pourra encore s'agir, notamment, de serrures, de haut-parleurs, de charnières et/ou de tirants.

Selon l'invention, ladite portière est constituée d'une armature 6, apte à supporter le ou lesdits éléments d'équipement 3, et de moyens d'habillage 7 de ladite armature 6, définissant avec cette dernière, de part et d'autre de celle-ci, des réservations intérieure 8 et extérieure 9 permettant d'accueillir le ou lesdits éléments d'équipement 3.

Grâce à la présence de l'armature centrale 6 qui assure la fonction de support des éléments d'équipement 3, celle-ci n'a plus à être remplie par les moyens d'habillage 7 ce qui libère les possibilités de choix en ce qui concerne leur caractéristique et permet d'améliorer leur aspect esthétique et/ou leur aérodynamisme, tout en conservant des caractéristiques qui pourront être constantes pour ladite armature.

Ainsi, en cas de changement de type et/ou de niveau de gamme de véhicule, on pourra conserver une armature identique d'un type de véhicule à l'autre, la différentiation s'effectuant par les moyens d'habillage.

Ces derniers présenteront, par exemple, une forme, une matière et/ou un mode de fabrication différents de celle de l'armature.

Lesdits moyens d'habillage 7 sont constitués, notamment, d'un premier panneau 10, dit intérieur, présentant ladite face intérieure 1 et d'un second panneau 11, dit extérieur, présentant ladite face extérieure 2.

Ledit panneau extérieur 11 pourra être constitué, par exemple, d'un matériau thermoplastique moulé. Quant au panneau intérieur 10, il pourra être constitué d'une âme revêtue d'une peau, selon différents exemples connus de l'homme de l'art.

Ladite armature 6 est constituée, notamment, de matériaux plastiques et/ou métalliques, par exemple aluminium moulé.

Elle pourra éventuellement être rigidifiée afin de renforcer la résistance de la portière aux chocs latéraux.

Comme illustré à la figure 3, on pourra pour cela munir ladite armature 6, par exemple, de nervures 12 s'entrecroisant, notamment situées du côté de l'armature 6 se trouvant en vis-à-vis du panneau extérieur 11.

Les matériaux choisis pour constituer ladite armature 6 pourront également contribuer à renforcer la résistance de la portière.

Selon ces différentes caractéristiques, ladite armature 6 présente ainsi un rôle global de structuration de la portière en assurant à la fois sa rigidification et le support des éléments d'équipement.

En se reportant de nouveau à la figure 2, on constate que ladite armature 6 pourra en outre présenter en partie basse une entretoise 13 en forme de déformation en direction de ladite face intérieure 1, destinée à permettre une prise d'appui de ladite portière sur le châssis et/ou le siège du véhicule, dans le but d'établir une liaison rigide avec le châssis et/ou le siège lors d'un choc latéral.

Cela étant, lesdits panneaux intérieur 10 et extérieur 11 et ladite armature 6 présentent, notamment, un même contour, et sont assujettis entre eux sur une partie au moins de leur périphérie. Une telle solution permet de faciliter la structure des moyens utilisés pour leur jonction qui pourront être constitués d'un seul élément, au moins par côté.

Comme illustrés à la figure 4, à ce sujet, lesdits panneaux intérieur 10, extérieur 11 et/ou ladite armature 6 présentent le long d'une partie au moins de leur périphérie un logement 14, ladite portière comportant en outre un et/ou des joints 15 aptes à coopérer avec le ou lesdits logements 14 pour permettre un maintien des panneaux intérieur 10 et extérieur 11 et de ladite armature 6 par pincement mutuel, au niveau du ou desdits logements 14.

Le ou lesdits logements 14 pourront être situés sur ledit panneau intérieur 10 et/ou ladite armature 6 et présenter une ouverture destinée à être dirigée vers l'intérieur du véhicule. Ledit joint 15 pourra ainsi être dissimulé par ledit panneau intérieur 10.

Selon l'exemple particulier de réalisation illustré, lesdits panneaux intérieur 10 et extérieur 11 sont munis d'une jupe 16, 17, pincés l'un contre l'autre par ledit joint 15, le bord correspondant 18 de ladite armature 6 étant pris en sandwich entre lesdits panneaux intérieur 10 et extérieur 11, juste en retrait de leur jupe 16, 17. Cette solution correspond au bord inférieur de la portière. Elle pourrait bien naturellement être employée au niveau des bords latéraux et/ou supérieurs. De nombreuses autres solutions, éventuellement complémentaires, pourraient également être utilisées, telles que, notamment, des éléments rapportés s'encliquetant les uns dans les autres et/ou des inserts.

Si l'on se reporte de nouveau aux figures 1 et 2, on constate que la portière conforme à l'invention pourra être équipée d'une vitre 19 apte à être escamotée d'une première position, dite fermée, illustrée à la figure 1, à une seconde position, dite ouverte, illustrée à la figure 2.

Selon l'invention, l'armature 6 est totalement du côté extérieur par rapport à la vitre 19, à l'exception de l'entretoise 13. On améliore de la sorte la sécurité, à la fois en cas de chocs et/ou de tentatives d'intrusion.

Ladite vitre 19 est prévue entre ladite armature 6 et ledit panneau intérieur 10, ces derniers définissant entre eux, au niveau de leur bord supérieur, prévu en vis-à-vis, une fente de passage 20 pour ladite vitre 19.

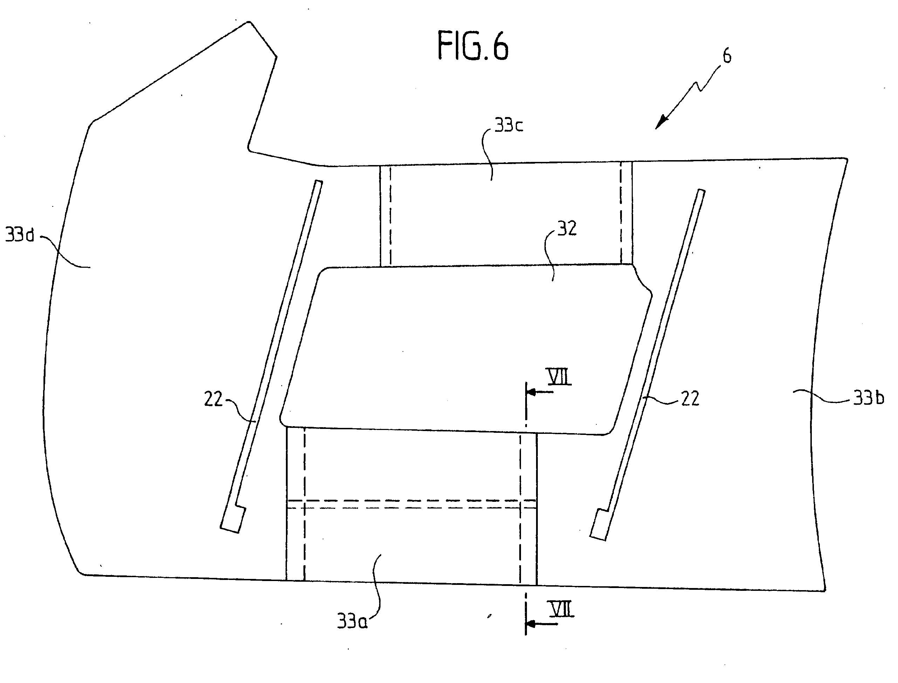

Comme illustrée aux figures 3 et 5, la portière conforme à l'invention pourra en outre comporter des moyens de manoeuvre 21 de ladite vitre 19, supportés par ladite armature 6.

Il s'agit, par exemple, d'une part, d'une ou plusieurs lumières ménagées dans l'armature 6 pour constituer un ou plusieurs rails 22, notamment deux rails orientés parallèlement, et d'autre part de patins 23 destinés à coulisser dans le ou lesdits rails 22 sous l'effet de moyens d'actionnement.

Lesdits moyens d'actionnement sont situés, par exemple, entre ladite armature 6 et ledit panneau extérieur 11. Ils sont constitués, notamment, d'un moteur 24 assujetti à ladite armature 6 entraînant un câble 25 relié auxdits patins 23 par l'intermédiaire de différentes poulies de renvoi 26.

Lesdits patins 23 sont munis de moyens de fixation 27 de ladite vitre 19. Afin de favoriser les mouvements, cette dernière pourra être guidée dans des rainures constituées dans la masse de ladite armature 6 et/ou rapportées sur celles-ci et/ou fixées entre ladite armature 6 et ledit panneau intérieur 10.

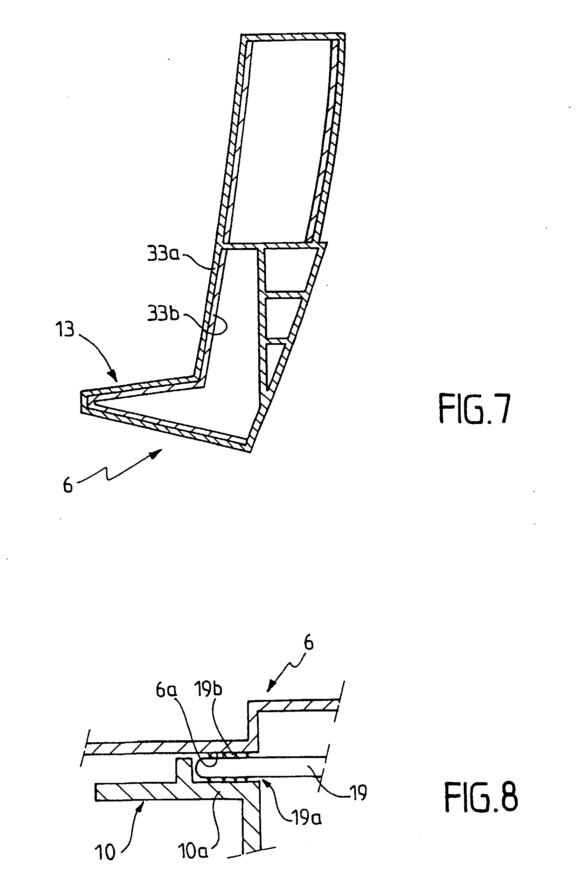

Comme montrée à la figure 8, à cet effet, l'armature 6 comporte une zone 6a qui coopère avec une forme 10a du panneau intérieur 10 pour définir les rainures 19a. Ces rainures seront éventuellement revêtues d'un matériau 19b tel que de la feutrine pour améliorer le coulissement de ladite vitre 19 à l'intérieur de celles-ci.

Selon le mode de réalisation illustré aux différentes figures, la portière présente un bord supérieur à partir duquel ladite vitre 19 s'étend, en position fermée.

Selon un autre mode de réalisation, ladite armature 6 et lesdits panneaux intérieurs 10 et extérieurs 11 sont prolongés en vis-à-vis pour constituer un cadre pour ladite vitre 19.

Comme illustrée à la figure 2, la portière conforme à l'invention comporte en outre, éventuellement, un bloc de matière 28, apte à remplir partiellement la réservation intérieure 8 de façon à renforcer localement la résistance du panneau intérieur 10.

Plus précisément, ledit panneau intérieur 10 pourra présenter des déformations en creux et/ou en bosses définissant, notamment, un accoudoir 29 ou un bandeau 30. Ledit bloc de matière 28 est alors prévu en vis-à-vis. La matière dudit bloc 28 est un matériau absorbant l'énergie de déformation.

Ledit bloc de matière 28 et ladite armature 6 présentent, notamment, un espace 31 juste suffisant pour l'escamotage de la vitre 19. De la même manière, l'armature 6 est à faible distance du panneau extérieur 2, ces deux éléments définissant entre eux un espace 31 a d'épaisseur limitée.

Cette disposition de l'armature 6 et du bloc de matière 28 permet de réaliser l'absorption d'énergie en cas de choc latéral par un véhicule ou un obstacle dit impacteur venant frapper la portière selon la direction A montrée à la figure 2. L'impacteur vient en contact sur l'armature 6, après un parcours de déformation du panneau extérieur 2 réduit au minimum simultanément, le passager (non représenté) vient en contact par inertie sur le panneau intérieur 1, selon la direction B, et plus particulièrement sur le bloc de matière 28, qui peut prendre appui sur l'armature 6. L'énergie correspondant est alors absorbée par 28, après compensation de l'espace 31.

L'entretoise 13 déjà évoquée est prévue apte à venir en contact avec la structure du châssis du véhicule (non représenté), de manière à y prendre appui lors du choc de l'impacteur selon la direction A.

Comme illustrée aux figures 1 à 5, ladite armature 6 est pleine et monobloc.

Selon un autre mode de réalisation, illustré aux figures 6 et 7, elle pourra également présenter un évidement central 32 et/ou être de constitution différente. Plus précisément, ladite armature 6 pourra être constituée de différents éléments planiformes 33a, 33b, 33c, 33d présentant un profil donné, assemblés et/ou emboîtés en relation les uns avec les autres pour conférer à ladite armature 6 une structure en caisson.

Par « planiforme », il faut comprendre qu'il s'agit d'éléments qui ne sont pas nécessairement plans, puisqu'ils pourront être éventuellement tubulaires et même subdivisés en sous-caissons, mais constitués d'une ou plusieurs faces dont les épaisseurs sont largement inférieures aux autres dimensions. Il s'agit, par exemple, de profilés extrudés.

Ils sont assemblés entre eux, notamment, par sertissage, collage, soudage, vissage ou autres.

Une telle structure en caisson présente l'avantage d'augmenter la rigidité de la portière conforme à l'invention.

Naturellement, d'autres modes de mise en oeuvre, à la portée de l'homme de l'art, auraient pu être envisagés sans pour autant sortir du cadre de l'invention.

## Revendications

1. Portière de véhicule, notamment automobile, présentant une face destinée à être orientée vers l'intérieur du véhicule, dite face intérieure (1), et une face destinée à être orientée vers l'extérieur du véhicule, dite face extérieure (2), ladite portière autorisant la mise en place d'un ou plusieurs éléments d'équipement (3) au moins en partie situés notamment entre lesdites faces intérieure (1) et extérieure (2), ladite portière étant constituée d'une armature (6), apte à supporter le ou lesdits éléments d'équipement (3), et de moyens d'habillage (7) de ladite armature (6), définissant avec cette dernière, de part et d'autre de celle-ci, des réservations intérieure (8) et extérieure (9) permettant d'accueillir le ou lesdits éléments d'équipement (3), lesdits moyens d'habillage (7) étant constitués d'un premier panneau (10), dit intérieur, présentant ladite face intérieure (1) et d'un second panneau (11), dit extérieur, présentant ladite face extérieure (2), lesdits panneaux intérieur (10) et extérieur (11) et ladite armature (6) présentent un même contour et étant assujettis entre eux sur une partie au moins de leur périphérie, **caractérisée en ce que** ledit panneau intérieur (10) et/ou ladite armature (6) présente le long d'une partie au moins de leur périphérie un logement (14), ouvert vers l'intérieur du véhicule, ladite portière comportant en outre un et/ou des joints (15) aptes à coopérer avec le ou lesdits logements (14) pour permettre un maintien des panneaux intérieur (10) et extérieur (11) et de ladite armature (6) par pincement mutuel au niveau du ou desdits logements (14).

2. Portière selon la revendication 1, dans laquelle ladite armature (6) est rigidifiée afin de renforcer la résistance de la portière aux chocs latéraux.

3. Portière selon la revendication 1, dans laquelle ladite armature (6) présente en partie basse une entretoise (13) de prise d'appui en direction de ladite face intérieure (1).

4. Portière selon la revendication 1, dans laquelle ladite armature (6) est située du côté extérieur de la portière par rapport à une vitre 19.

5. Portière selon la revendication 4, dans laquelle ladite vitre (19) apte à être escamotée d'une première position, dite fermée, à une seconde position, dite ouverte, prévue entre ladite armature (6) et ledit panneau intérieur (10), ladite armature (6) et ledit panneau intérieur (10) définissant entre eux, au niveau de leurs bords supérieurs, prévus en vis-à-vis, une fente de passage (20) pour ladite vitre (19).

6. Portière selon la revendication 5, dans laquelle ladite armature (6) comporte une zone (6a) coopérant avec une forme (10a) du panneau intérieur (10) pour définir des rainures de guidage (19a), apte à favoriser les mouvements de ladite vitre (19).

7. Portière selon la revendication 6, dans laquelle lesdites rainures (19a) sont revêtues d'un matériau (19b) apte à favoriser le coulissement de ladite vitre (19) à l'intérieur de celles-ci.

8. Portière selon la revendication 4, dans laquelle ladite armature (6) et lesdits panneaux intérieur (10) et extérieur (11) sont prolongés en vis-à-vis pour constituer un cadre pour ladite vitre.

9. Portière selon la revendication 1 ou 4, comportant en outre un bloc de matière (28) apte à remplir partiellement la réservation intérieure (8) de façon à renforcer localement la résistance du panneau intérieur (10).

10. Portière selon la revendication 9, présentant entre ledit bloc de matière (28) et ladite armature (6) un espace (31) juste suffisant pour l'escamotage de la vitre (19).

11. Portière selon la revendication 1, dans laquelle ladite armature (6) est constituée de différents éléments planiformes (33a, 33b, 33c, 3d) présentant un profil donné, assemblés et/ou emboîtés en relation les uns avec les autres pour conférer à ladite armature (6) une structure en caisson.

## Claims

1. A door for a vehicle, in particular a car exhibiting a face intended for orientation towards the inside of the vehicle, so-called internal face (1), and a face intended for orientation towards the outside of the vehicle, so-called external face (2), said door authorising the placement of one or several pieces of equipment (3) at least partially situated between said internal (1) and external (2) faces, said door being formed of a reinforcement (6), capable of supporting said piece(s) of equipment (3), and dressing means (7) of said reinforcement (6), defining with the latter, of both sides thereof, internal (8) and external (9) recesses capable of receiving said piece(s) of equipment (3), said dressing means (7) being formed of a first panel (10), so-called internal, exhibiting said internal face (1) and of a second panel (11), so-called external, exhibiting said external face (2), said internal (10) and external (11) panels and said reinforcement (6) exhibiting the same contour and being slaved together over at least a portion of the periphery thereof, **characterised in that** said internal panel (10) and/or said reinforcement (6) exhibits along a portion at least of the periphery thereof a housing (14), open towards the inside of the vehicle, said door including moreover one and/or several joints (15) capable of co-operating with said housing(s) (14) for holding the internal (10) and external (11) panels and said reinforcement (6) by mutual pinching at said housing(s) (14).

2. A door according to claim 1, wherein said reinforcement (6) is stiffened for reinforcing the resistance of the door to lateral shocks.

3. A door according to claim 1, wherein said reinforcement (6) exhibits in its lower section a spacer (13) for resting along the direction of said internal face (1).

4. A door according to claim 1, wherein said reinforcement (6) is situated on the external side of the door relative to a glass (19).

5. A door according to claim 4, wherein said reinforcement (19) capable of being retracted from a first, so-called closed position, to a second, so-called open position, provided between said reinforcement (6) and said internal panel (10), said reinforcement (6) and said internal panel (10) defining together, at the upper edges thereof, provided face to face, a passage slot (20) for said glass (19).

6. A door according to claim 5, wherein said reinforcement (6) includes a zone (6a) co-operating with a shape (10a) of the said internal panel (10) for defining guiding grooves (19a), capable of promoting the movements of said glass (19).

7. A door according to claim 6, wherein said grooves (19a) are coated with a material (19b) capable of promoting the sliding of said glass (19) inside thereof.

8. A door according to claim 4, wherein said reinforcement (6) and said internal (10) and external (11) panels are extended face to face to form a frame for said glass.

9. A door according to claim 1, including moreover a bloc of materiel (18) capable of filling gradually the internal recess (8) so as to reinforce locally the resistance of the internal panel (10).

10. A door according to claim 9, exhibiting between said block of material (28) and said reinforcement (6) a space (31) just sufficient for retracting the glass (19).

11. A door according to claim 1, wherein said reinforcement (6) is composed of several planar elements (33a, 33b, 33c, 33d) having a given profile, assembled and/or nested relative to one another for conferring said reinforcement (6) a caisson-type structure.

## Patentansprüche

1. Fahrzeugtür insbesondere für Kraftfahrzeuge, aufweisend eine Seite, vorgesehen, um auf das Innere des Fahrzeugs ausgerichtet zu werden, die als innere Seite (1) bezeichnet wird, und eine Seite, vorgesehen, um auf die Außenseite des Fahrzeugs ausgerichtet zu werden, die als äußerliche Seite (2) bezeichnet wird, wobei die besagte Tür den Einbau von einem oder mehreren Ausstattungselementen (3) erlaubt, die wenigstens zum Teil insbesondere zwischen den besagten inneren (1) und äußerlichen (2) Seiten angeordnet sind, wobei die besagte Tür aus einem Gerüst (6), geeignet, um das bzw. die besagten Ausstattungselemente (3) zu tragen, und Mitteln zur Verkleidung (7) des besagten Gerüsts (6) besteht, die mit diesem Letzteren beiderseits von diesem Letzteren innere (8) und äußerliche (9) Ausnehmungen bilden, die es erlauben, das bzw. die besagten Ausstattungselemente (3) aufzunehmen, wobei die besagten Mittel zur Verkleidung (7) aus einer ersten Platte (10), die als innere bezeichnet wird und die besagte innere Seite (1) aufweist, und einer zweiten Platte (11), die als äußerliche bezeichnet wird und die besagte äußerliche Seite (2) aufweist, bestehen, wobei die besagten Platten, die innere Platte (10) und die äußerliche Platte (11), und das besagte Gerüst (6) einen gleichen Umriß aufweisen und untereinander auf wenigstens einem Teil ihres Umkreises befestigt sind, **dadurch gekennzeichnet, daß** die besagte innere Platte (10) und/oder das besagte Gerüst (6) entlang wenigstens eines Teiles von ihrem Umkreis eine Aussparung (14) aufweisen, die in Richtung auf das Innere des Fahrzeugs geöffnet ist, wobei die besagte Tür außerdem eine Dichtung und/oder Dichtungen (15) umfaßt, die geeignet sind, um mit der bzw. den besagten Aussparungen (14) zusammenzuwirken, um eine Haltung der inneren (10) und äußerlichen (11) Platten und des besagten Gerüstes (6) durch beiderseitiges Klemmen im Bereich der besagten Aussparung oder Aussparungen (14) zu erlauben.

2. Tür nach Anspruch 1, in der das besagte Gerüst (6) versteift ist, um die Beständigkeit der Tür gegen Seitenschläge zu verstärken.

3. Tür nach Anspruch 1, in der das besagte Gerüst (6) im unteren Teil eine Querstange (13) zum Stützen in Richtung nach der besagten inneren Seite (1) aufweist.

4. Tür nach Anspruch 1, in der das besagte Gerüst (6) auf der Außenseite der Tür hinsichtlich einer Fensterscheibe 19 befindlich ist.

5. Tür nach Anspruch 4, in der die besagte Fensterscheibe (19) geeignet ist, um von einer ersten, sogenannten geschlossenen Position in eine zweite, sogenannte offene Position eingefahren zu werden, vorgesehen zwischen dem besagten Gerüst (6) und der besagten inneren Platte (10), wobei das besagte Gerüst (6) und die besagte innere Platte (10) unter sich im Bereich ihrer oberen, gegenüberliegend vorgesehenen Ränder einen Schlitz (20) für den Durchgang der besagten Fensterscheibe (19) bilden.

6. Tür nach Anspruch 5, in der das besagte Gerüst (6) einen Bereich (6a) umfaßt, der mit einer Form (10a) der inneren Platte (10) zusammenwirkt, um Führungsnuten (19a) zu bilden, geeignet, um die Bewegungen der besagten Fensterscheibe (19) zu begünstigen.

7. Tür nach Anspruch 6, in der die besagten Nuten (19a) mit einem Stoff (19b) ausgekleidet sind, geeignet, um das Gleiten der besagten Fensterscheibe (19) innerhalb dieser letzteren zu begünstigen.

8. Tür nach Anspruch 4, in der das besagte Gerüst (6) und die besagten Platten, die innere Platte (10) und die äußere Platte (11), entgegengesetzt verlängert sind, um einen Rahmen für die besagte Fensterscheibe zu bilden.

9. Tür nach Anspruch 1 oder 4, umfassend außerdem eine Stoffeinlage (28), geeignet, um die innere Ausnehmung (8) teilweise aufzufüllen, um die Festigkeit der inneren Platte (10) örtlich zu verstärken.

10. Tür nach Anspruch 9, aufweisend zwischen der besagten Stoffeinlage (28) und dem besagten Gerüst (6) einen Raum (31), genau ausreichend für das Einfahren der Fensterscheibe (19).

11. Tür nach Anspruch 1, in der das besagte Gerüst (6) aus verschiedenen Elementen mit flacher Oberfläche (33a, 33b, 33c, 3d) besteht, aufweisend ein bestimmtes Profil, die zusammengebaut und/oder miteinander in Verbindung eingeschachtelt sind, um dem besagten Gerüst (6) eine kastenartige Struktur zu verleihen.
